# EUROPEAN PATENT SPECIFICATION

(11) **EP 3 321 763 B1**
(45) Date of publication and mention of the grant of the patent: **14.08.2019**
(21) Application number: 17198250.7
(22) Date of filing: 25.10.2017
(51) Int. Cl.: G05G 1/02, G05G 1/08, G05G 9/047

(54) **A SWITCHING DEVICE FOR AN AGRICULTURAL VEHICLE**
SCHALTVORRICHTUNG FÜR EIN LANDWIRTSCHAFTLICHES FAHRZEUG
DISPOSITIF DE COMMUTATION POUR VÉHICULE AGRICOLE

(30) Priority: 10.11.2016 GB 201618997
(43) Date of publication of application: 16.05.2018
(73) Proprietor: AGCO International GmbH, 8212 Neuhausen am Rheinfall (CH)
(72) Inventor: BARZEN, Alexander, 87616 Marktoberdorf (DE); WEIGAND, Jan, 87616 Marktoberdorf (DE); STALLMEIERE, Dirk, 87616 Marktoberdorf (DE)
(74) Representative: AGCO Intellectual Property Department

(56) References cited:
- DE-A1-102007 022 526
- US-B2- 7 654 359
- US-B2- 7 823 685

## Description

### Field of the Invention

The present invention relates to a switching device for an agricultural vehicle, and an agricultural vehicle having such a switching device.

### Background of the Invention

Agricultural or constructional vehicles are generally provided with a variety of vehicle components, e.g. front or rear hitches, loader devices, or other hydraulic or pneumatic circuits. Such components can comprise a number of related control variables, e.g. a depth, height, and/or extension length of a component.

US Patent No. US 7,654,359 describes a switching device designed for increased operator comfort, having adjustment wheels switches for the control of a component variable of the tractor, with further rocker switches provided forward of the adjustment wheels switches, the rocker switches for control of additional variables related to the tractor component. However, an operator can easily become confused as to which variables are controlled by which switches, which can often result in the operator mistakenly actuating the wrong component. In addition, an operator may be required to look directly at the switching device and possibly remove their hand from the switching device in order to see where the rocker switches are located. Such actions can serve to divert the operator's attention, and can result in increased risk of operator discomfort or error.

It is an object of the invention to provide a switching device having a construction which allows for improved operator convenience and comfort.

### Summary of the Invention

Accordingly, there is provided a switching device for an agricultural vehicle, the switching device comprising:
a first or primary switch moveable along a switch path in a first direction for control of a first or primary variable of the vehicle, the first switch comprising a rotary switch in the form of an adjustment wheel; and
a second or secondary switch moveable in a second direction different to said first direction for control of a second or secondary variable of the vehicle,
characterised in that the second switch is mounted on an outer rim of the adjustment wheel.

Providing first and second or primary and secondary switches which are commonly located, where a second switch is mounted on the body of a first switch, allows an operator to easily control first and second variables without repositioning their fingers or hand. In addition, the first and second variables may be arranged as related control variables, such that an operator can easily identify that operation of the second switch results in control of a variable related to the variable which is controlled by the first switch. It will be understood that the first and second switches may be provided as simple pushbutton or "on/off" switches, or the switches may be provided as having multiple states or as continuously-variable switches.

In this case, adjustment of the first variable can be performed by rotation of the first switch along a rotary switch path, about a rotational axis. The rotary switch is an adjustment wheel.

Providing the second switch on an outer rim of an adjustment wheel allows for ease of access to the second switch, as the first switch is rotated.

Preferably, the second switch comprises at least one of the following: a pushbutton switch, a rocker switch, a toggle switch, a scroll wheel.

Preferably, the switching device comprises an upper first switch and a lower first switch, the upper and lower first switches provided as concentric rotary switches, the upper and lower first switches having respective upper and lower second switches carried thereon.

There is further provided an agricultural vehicle, preferably an agricultural tractor, having at least one switching device as described above, and at least one vehicle component controlled by said at least one switching device.

Preferably, the first and second variables are related control parameters for control of the vehicle component, such that an operator can easily interpret the status of related control parameters based on the status of the first and second switches.

Preferably, the first variable controlled by the first switch sets an operating range for the vehicle component.

Preferably, the second variable controlled by the second switch operates the vehicle component within the operating range set by the first variable.

Such an operating range may comprise a component depth control limit, a height limit, and/or a length limit for a component.

Preferably, the second switch controls a depth, height and/or length value of the component, within the limits of the operating range set by the first switch.

### Detailed Description of the Invention

Embodiments of the invention will now be described, by way of example only, with reference to the accompanying drawings, in which:
Fig. 1 is a side view of an agricultural tractor having a user control system according to the invention;
Fig. 2 is a perspective view of a switching device according to a first embodiment of the invention; and
Fig. 3 is a further perspective view of the switching device of Fig. 2.

The drawings are provided by way of reference only, and will be acknowledged as not to scale.

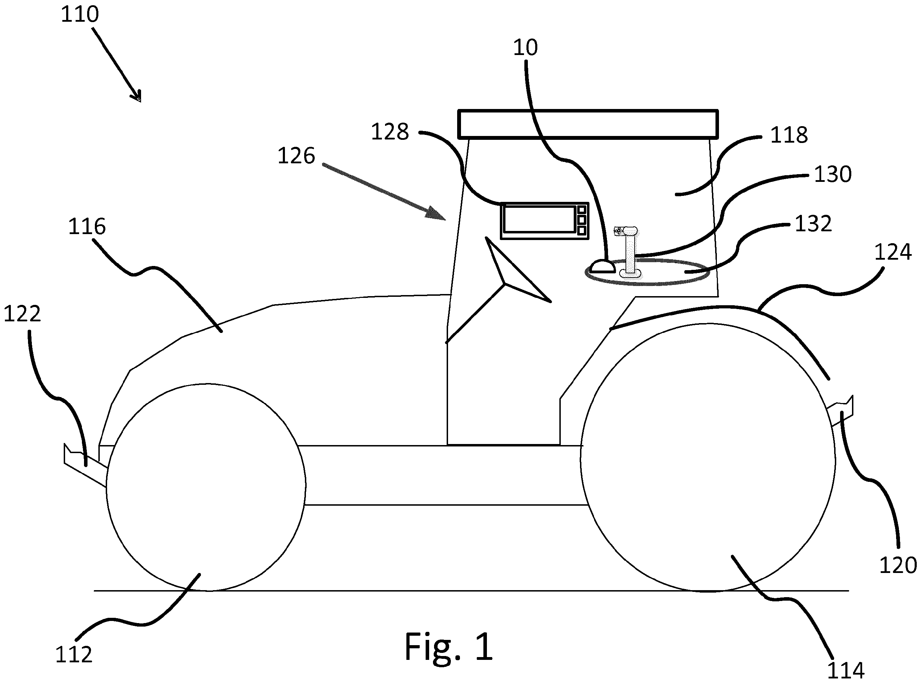

With reference to Fig. 1, a vehicle according to the invention in the form of an agricultural tractor is indicated at 110. The tractor 110 comprises front wheels 112 and rear wheels 114, a forward engine section 116 and a cab section 118. A rear linkage 120 is provided at the rear of the tractor 110, and a front linkage 122 is provided at the front of the tractor 110. The front and rear linkages 120,122 can be actuated or moved using associated hydraulic cylinders. Rear fenders 124 are provided to cover a portion of the rear wheels 114.

Within the cab 118, an operator station 126 is provided. The operator station 126 comprises a user interface device 128 which is used to display information relating to tractor operation, and to control different elements of the tractor 110. The operator station 126 is provided with a control lever 130, which can be used to operate different elements of the tractor 110, e.g. hydraulic circuits, lifting systems, and/or to control the acceleration and steering of the tractor 110.

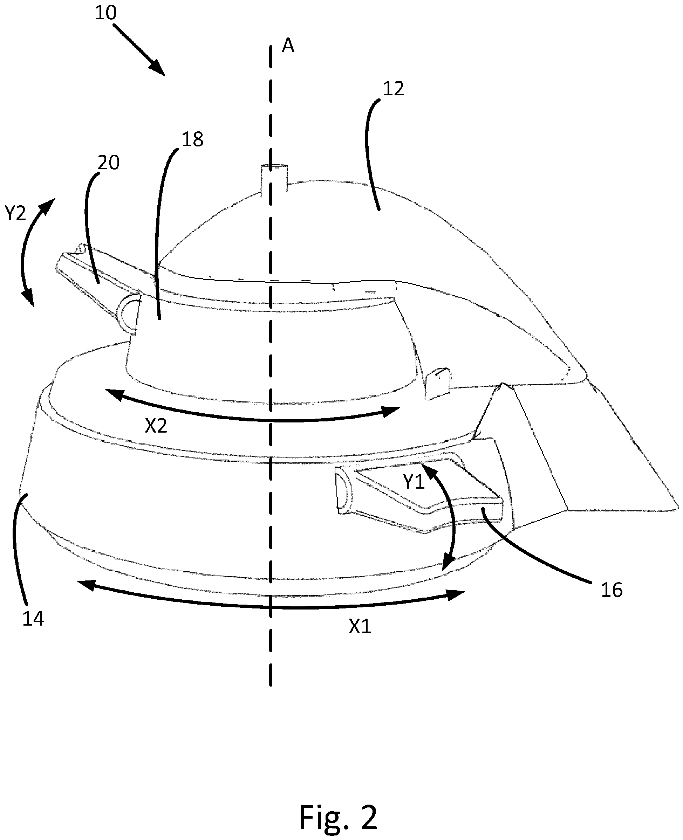

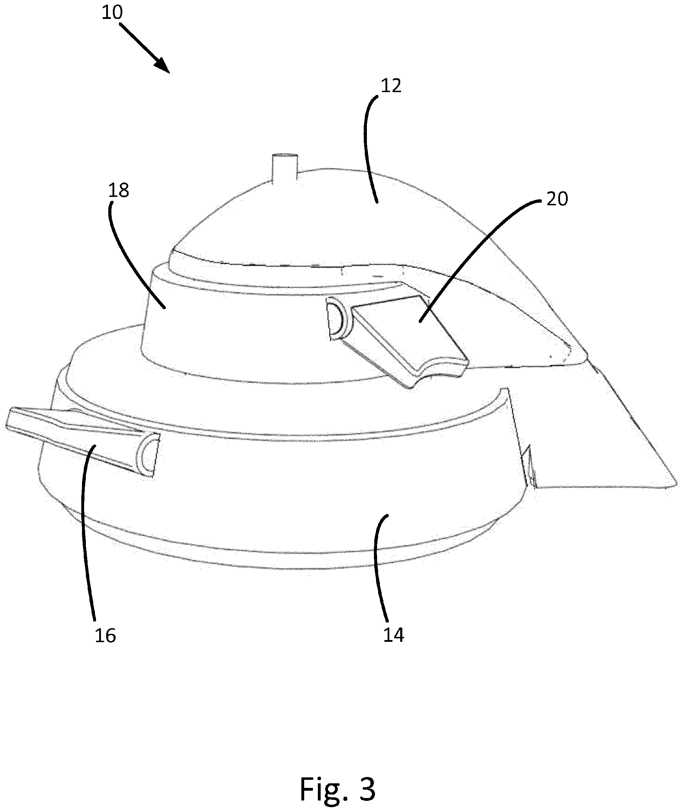

The operator station 126 is further provided with a switching device 10, which can be provided as part of an arm rest 132 for an operator. An enlarged view of a switching device 10 according to a first embodiment of the invention is provided in Figs. 2 and 3.

The switching device 10 comprises a housing part 12 having a dome-like shape intended for the resting of an operator's hand. The switching device 10 comprises a first or primary switch in the form of a lower adjustment wheel 14 arranged towards the base of the switching device 10. The adjustment wheel 14 is provided in a substantially horizontal alignment, and is arranged to be rotated about a central axis A, which extends through the top of the housing part 12. The adjustment wheel 14 is arranged to lie beneath the fingers of an operator having a hand resting on the housing part 12, such that the wheel 14 can be easily and comfortably adjusted by the operator.

A second or secondary switch in the form of a rocker switch 16 is provided on the rim of the adjustment wheel 14, the rocker switch 16 carried by the adjustment wheel 14. Accordingly, as the adjustment wheel 14 is rotated about the central axis A, the rocker switch 16 is carried on the adjustment wheel 14. As a result, an operator can easily determine the position of the rocker switch 16 without looking at the switching device 10, by feeling for the switch 16 using their fingers.

In addition, the first and second switches 14,16 can be configured to control related variables. For example, the adjustment wheel 14 may be used to set a desired height, extension, or depth of a vehicle component such as a front or rear hitch, a front loader, etc. The rocker switch 16 can then be used to control a second variable for the same vehicle component, e.g. a rapid raising or lowering of a hitch or implement, or any other positional variable which may include height, extension, or depth. Alternatively, the adjustment wheel 14 may be used to set a desired operational range for a component, e.g. an upper permissible height for a front loader, where the associated rocker switch 16 is used to adjust a variable of the component within the desired range, i.e. the height of the front loader up to the upper permissible height set by the wheel 14.

By configuring the first and second switches 14,16 to adjust different variables which are related to the control of the same vehicle component, as a result an operator can easily determine the relationship between the first and second switches 14,16 and actuate the switches 14,16 without looking at the switching device 10 or repositioning their hand.

In one aspect of the invention, the rocker switch 16 can be positioned along the rim of the adjustment wheel 14 to act as an indicator or marker of the current variable value selected by rotation of the wheel 14.

The rocker switch 16 is arranged such that it is moveable or actuatable in a different direction to the direction of rotation of the adjustment wheel 14, the rocker switch 16 actuatable in a substantially vertical direction as indicated by arrow Y1, the adjustment wheel 14 rotatable along a path indicated by arrow X1 substantially parallel to the horizontal axis. Providing switches 14,16 actuatable in different directions prevents inadvertent actuation of one switch while moving the other switch.

It will be understood that the configuration of a second switch carried on a first switch may be replicated to provide additional controls for components. In the illustrated embodiment, the switching device 10 further comprises an upper adjustment wheel 18 arranged above the lower adjustment wheel 14, the upper adjustment wheel 18 having a reduced diameter compared to the lower adjustment wheel 14, and arranged parallel to and concentric with the lower adjustment wheel 14. The upper adjustment wheel 18 is used to control a first variable of a further vehicle component. In addition, similar to the lower adjustment wheel 14, an upper rocker switch 20 is provided on the outer rim of the upper adjustment wheel 18, for control of a further vehicle component variable, preferably a second variable related to the first variable controlled by the upper adjustment wheel 18.

The switching device 10 may be configured to have any number of first and second switches, the second switches mounted or carried on the respective first switches.

As with the first and second switches of the lower adjustment wheel and rocker 14,16, the upper rocker switch 20 is arranged such that it is moveable or actuatable in a different direction to the direction of rotation of the upper adjustment wheel 18, the rocker switch 20 actuatable in a substantially vertical direction as indicated by arrow Y2, the adjustment wheel 18 rotatable along a path indicated by arrow X2 substantially parallel to the horizontal axis. The relative movements of the different switching elements 14,16,18,20 can be seen in Fig. 3, wherein the adjustment wheels 14,18 have been moved to set different values for the respective first variables, and wherein the rocker switches 16,20 can be controlled to adjust the values for the respective second variables.

The use of two adjustment wheels 14,18 in the switching device 10 allows for a plurality of vehicle components to be easily and relatively comfortably controlled by an operator from the armrest 132. Further details on the internal construction of such a rotary switching device can be found in US 7,654,359. While the second switches 16,20 are provided as rocker switches in the above embodiment, it will be understood that any suitable switch device may be used, e.g. a pushbutton switch, a toggle switch, a scroll wheel, a rotary dial or disc.

It will be understood that individual features of the different embodiments may be combined without departing from the scope of the invention. For example, different combinations of switch types may be used in the different switching devices. The use of a switching device wherein a secondary switch is provided carried on or mounted to a primary switch allows for an operator to easily move between actuation of the different switches without requiring the operator to look directly at the switching device. In addition, as the switches are commonly located, an operator can easily associate the variables controlled by the switches with each other.

The invention is not limited to the embodiments described herein, and may be modified or adapted without departing from the scope of the present invention.

## Claims

1. A switching device (10) for an agricultural vehicle (110), the switching device comprising:
a first switch (14) moveable along a switch path in a first direction (X1) for control of a first variable of the vehicle, the first switch comprising a rotary switch in the form of an adjustment wheel; and
a second switch (16) moveable in a second direction (Y1) different to said first direction (X1) for control of a second variable of the vehicle,
**characterised in that** the second switch (16) is mounted on an outer rim of the adjustment wheel (14).

2. The switching device of claim 1, wherein the second switch comprises at least one of the following: a pushbutton switch, a rocker switch, a toggle switch, a scroll wheel.

3. The switching device of claim 1 or claim 2, wherein the switching device (10) comprises an upper first switch (18) and a lower first switch (14), the upper and lower first switches (18, 14) provided as concentric rotary switches, the upper and lower first switches having respective upper and lower second switches (20, 16) carried thereon.

4. An agricultural vehicle (110), preferably an agricultural tractor, having at least one switching device (10) as claimed in any one of claims 1-3, and at least one vehicle component (120, 122) controlled by said at least one switching device (10).

5. The agricultural vehicle of claim 4, the switching device (10) configured such that the first and second variables are related control parameters for control of the vehicle component (120, 122).

6. The agricultural vehicle of claim 4 or claim 5, wherein the first variable controlled by the first switch (14) sets an operating range for the vehicle component (120).

7. The agricultural vehicle of claim 6, wherein the operating range is selected from at least one of the following factors: a component depth control limit, a height limit, and/or a length limit for a component.

8. The agricultural vehicle of claim 6 or claim 7, wherein the second variable controlled by the second switch (16) controls the vehicle component within the operating range set by the first variable.

9. The agricultural vehicle of claim 8, wherein the second switch (16) controls a depth, height and/or length value of the component, within the limits of the operating range set by the first switch (14).

## Patentansprüche

1. Schaltvorrichtung (10) für ein landwirtschaftliches Fahrzeug (110), wobei die Schaltvorrichtung das Folgende aufweist:
einen ersten Schalter (14), der in einer ersten Richtung (X1) entlang eines Schalterpfads beweglich ist, um eine erste Variable des Fahrzeugs zu regeln/steuern, wobei der erste Schalter einen Drehschalter in der Form eines Einstellrads aufweist; und
einen zweiten Schalter (16), der in einer sich von der ersten Richtung (X1) unterscheidenden zweiten Richtung (Y1) beweglich ist, um eine zweite Variable des Fahrzeugs zu regeln/steuern, **dadurch gekennzeichnet, dass**
der zweite Schalter (16) an einem äußeren Rand des Einstellrads (14) montiert ist.

2. Schaltvorrichtung nach Anspruch 1, wobei der zweite Schalter mindestens eines der folgenden Teile aufweist: einen Drucktastenschalter, einen Kippschalter, einen Wechselschalter und ein Scrollrad.

3. Schaltvorrichtung nach Anspruch 1 oder Anspruch 2, wobei die Schaltvorrichtung (10) einen oberen ersten Schalter (18) und einen unteren ersten Schalter (14) aufweist, wobei der obere erste Schalter (18) und der untere erste Schalter (14) als konzentrische Drehschalter ausgebildet sind, wobei obere erste Schalter und der untere erste Schalter jeweils einen entsprechenden oberen zweiten Schalter (20) und einen unteren zweiten Schalter (16) tragen.

4. Landwirtschaftliches Fahrzeug (110), vorzugsweise ein landwirtschaftlicher Traktor, mit mindestens einer Schaltvorrichtung (10) nach mindestens einem der Ansprüche 1-3, und mit mindestens einer Fahrzeugkomponente (120, 122), die durch die mindestens eine Schaltvorrichtung (10) gesteuert/geregelt ist.

5. Landwirtschaftliches Fahrzeug nach Anspruch 4, wobei die Schaltvorrichtung (10) so konfiguriert ist, dass die erste Variable und die zweite Variable miteinander verbundene Steuer/Regelparameter zum Steuern/Regeln der Fahrzeugkomponente (120, 142) sind.

6. Landwirtschaftliches Fahrzeug nach Anspruch 4 oder Anspruch 5, wobei die erste durch den ersten Schalter (14) gesteuerte/geregelte Variable einen Betriebsbereich für Fahrzeugkomponente (120) setzt.

7. Landwirtschaftliches Fahrzeug nach Anspruch 6, wobei der Betriebsbereich aus mindestens einem der folgenden Faktoren ausgewählt ist: einer Steuer/Regelbegrenzung der Tiefe einer Komponente, einer Höhenbegrenzung und/oder einer Längenbegrenzung einer Komponente.

8. Landwirtschaftliches Fahrzeug nach Anspruch 6 oder Anspruch 7, wobei die zweite durch den zweiten Schalter (16) gesteuerte/geregelte Variable die Fahrzeugkomponente innerhalb der Begrenzungen des Betriebsbereichs steuert/regelt, der durch die erste Variable gesetzt ist.

9. Landwirtschaftliches Fahrzeug nach Anspruch 8, wobei der zweite Schalter (16) einen Tiefen-, Höhen- und/oder Längenwert der Komponente innerhalb der Begrenzungen des durch den ersten Schalter (14) gesetzten Betriebsbereichs steuert/regelt.

## Revendications

1. Dispositif de commutation (10) pour un véhicule agricole (110), le dispositif de commutation comprenant :
un premier commutateur (14) mobile le long d'un trajet de commutation dans une première direction (X1) pour la commande d'une première variable du véhicule, le premier commutateur comprenant un commutateur rotatif sous la forme d'une molette de réglage ; et
un second commutateur (16) mobile dans une seconde direction (Y1) différente de ladite première direction (X1) pour la commande d'une seconde variable du véhicule,
**caractérisé en ce que** le second commutateur (16) est monté sur un bord externe de la molette de réglage (14).

2. Dispositif de commutation selon la revendication 1, dans lequel le second commutateur comprend au moins l'un des suivants : un commutateur à bouton-poussoir, un commutateur à levier, un commutateur à bascule, une molette de défilement.

3. Dispositif de commutation selon la revendication 1 ou la revendication 2, dans lequel le dispositif de commutation (10) comprend un premier commutateur supérieur (18) et un premier commutateur inférieur (14), les premiers commutateurs supérieur et inférieur (18, 14) prévus en tant que commutateurs rotatifs concentriques, les premiers commutateurs supérieur et inférieur ayant des seconds commutateurs supérieur et inférieur (20, 16) respectifs portés sur ceux-ci.

4. Véhicule agricole (110), de préférence un tracteur agricole, ayant au moins un dispositif de commutation (10) selon l'une quelconque des revendications 1 à 3, et au moins un composant de véhicule (120, 122) commandé par ledit au moins un dispositif de commutation (10).

5. Véhicule agricole selon la revendication 4, le dispositif de commutation (10) configuré de telle manière que les première et seconde variables sont des paramètres de commande liés pour la commande du composant de véhicule (120, 122).

6. Véhicule agricole selon la revendication 4 ou la revendication 5, dans lequel la première variable commandée par le premier commutateur (14) définit une plage de fonctionnement pour le composant de véhicule (120).

7. Véhicule agricole selon la revendication 6, dans lequel la plage de fonctionnement est choisie parmi au moins l'un des facteurs suivants : une limite de commande de profondeur de composant, une limite de hauteur et/ou une limite de longueur pour un composant.

8. Véhicule agricole selon la revendication 6 ou la revendication 7, dans lequel la seconde variable commandée par le second commutateur (16) commande le composant de véhicule à l'intérieur de la plage de fonctionnement définie par la première variable.

9. Véhicule agricole selon la revendication 8, dans lequel le second commutateur (16) commande une valeur de profondeur, de hauteur et/ou de longueur du composant, à l'intérieur des limites de la plage de fonctionnement définie par le premier commutateur (14).
